# EUROPEAN PATENT APPLICATION

(11) **EP 4 400 525 A1**
(43) Date of publication of application: **17.07.2024**
(21) Application number: 23151255.9
(22) Date of filing: 12.01.2023
(51) Int. Cl.: C08G 59/62, C08K 5/5317, C08L 63/00, C09J 163/00

(54) **ONE COMPONENT LIQUID EPOXY RESIN COMPOSITION**

(71) Applicant: Henkel AG & Co. KGaA, 40589 Düsseldorf (DE)
(72) Inventor: Chen, Chunfu, Kanagawa Prefecture, 211-0067 (JP)

(57) **Abstract**

The present invention relates to a liquid one-component (1K) epoxy resin composition comprising a liquid epoxy resin, a liquid phenol resin and a phosphonium-based ionic liquid. Further, the present invention relates to a cured product obtained from the liquid one-component (1K) epoxy resin composition according to the invention and the cured product's use.

## Description

### FIELD OF THE INVENTION

The present invention relates to a liquid one-component (1K) epoxy resin composition comprising a liquid epoxy resin, a liquid phenol resin and a phosphonium-based ionic liquid. Further, the present invention relates to a cured product obtained from the liquid one-component (1K) epoxy resin composition according to the invention and the cured product's use.

### BACKGROUND OF THE INVENTION

An epoxy resin has been used in a wide range of application such as coating materials, electric and electronic insulating materials and adhesive agents since its cured products have excellent performance in point of a mechanical property, an electrical property, a thermal property, chemical resistance and an adhesion property.

Epoxy resins can react fast with liquid curing agents. Therefore, most existing epoxy compositions are provided as two-component (2K) type compositions with a first part being an epoxy resin composition and a second part being a curing agent. Mixing these two parts is needed before use which is very troublesome and often causes problems such as insufficient mixing and very short work life for end users.

Particularly in recent years, a one-component epoxy resin composition which is excellent in a curing property and storage stability has been required in order to improve the productivity in electronic material application. For example, in WO 2012/067270 A1, there are described one-component epoxy resin compositions comprising a liquid epoxy resin, a liquid phenol resin, and a powdery latent curing agent.

One-component epoxy compositions are highly desired to avoid the problems with regard to mixing and short work life for end users. However, till today, one-component liquid thermal curable epoxy compositions are technically difficult to prepare due to high reactivity and short pot life.

In the state of the art, the above problems were addressed by provision of a one-component epoxy resin composition comprising a curing agent being present in the solid state, as e.g. in the above mentioned WO 2012/067270 A1. The one-component epoxy resins addressing the above problems have the disadvantage of high curing temperatures.

The invention's underlaying problem relates to the provision of a one-component epoxy resin composition exhibiting a good stability with sufficiently long pot life for easy handling at room temperature. At the same time, the one-component epoxy resin composition should have low curing temperatures.

### SUMMARY OF THE INVENTION

The invention's underlaying problem is solved by the subject-matter of claim 1. According to a first aspect of the invention, there is provided a liquid one-component (1K) epoxy resin composition comprising, based on the weight of the composition: a) from 20 to 80 wt.% of at least one liquid epoxy resin; b) from 20 to 60 wt.% of at least one liquid phenol resin; and c) from 0.1 to 15 wt.% of at least one phosphonium-based ionic liquid.

As used herein, "liquid" means that the component is in liquid state at room temperature (20°C) and normal pressure (1013 mbar).

The one-component epoxy resin composition of the invention is in liquid state, whereupon the three essential components are in liquid state, too. The essential components along with the respective amounts of the essential components enable that a high degree of stability of the composition, a high pot life and a relatively low curing temperature are achieved.

In one embodiment, the composition comprises, based on the weight of the composition, a) from 30 to 70 wt.%, preferably 40 to 60 wt.%, of at least one liquid epoxy resin.

In one embodiment, the composition comprises, based on the weight of the composition, b) from 25 to 50 wt.%, preferably 30 to 45 wt.%, of at least one liquid phenol resin.

In one embodiment, the composition comprises, based on the weight of the composition, c) from 0.2 to 10 wt.%, preferably 0.5 to 5 wt.%, of at least one phosphonium-based ionic liquid.

As a first essential component, the composition comprises at least one liquid epoxy resin. According to one embodiment, the at least one liquid epoxy resin of the composition is selected from: glycidyl ethers of polyhydric alcohols and polyhydric phenols; glycidyl esters of polycarboxylic acids; and epoxidized polyethylenically unsaturated hydrocarbons, esters, ethers and amides.

The liquid epoxy resin may be a liquid diglycidyl ether. Suitable liquid diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1,8-octanediol, 1,12-dodecanediol, cyclopentane diol and cyclohexane diol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers.

Particular preference is given to liquid epoxy resins obtained by reacting bisphenol A or bisphenol F and epichlorohydrin. Such epoxy resins, which are liquid at room temperature, typically have epoxy equivalent weights of approximately 150 to approximately 480 g/mol. Products of this type are commercially available (Dow Chemicals) for example as DER 331, having an epoxy equivalent weight of approximately 180 to 195 g/mol, or DER 332, having an epoxy equivalent weight of approximately 170 to 175 g/mol.

It is most preferred that the liquid epoxy resin is a bisphenol A type epoxy resin. The most preferred commercially available product is jER 828 supplied by Mitsubishi Chemical Corporation.

As used herein, the term "equivalent (eq.)" relates, as is usual in chemical notation, to the relative number of reactive groups present in the reaction. The term "equivalent weight" as used herein refers to the molecular weight divided by the number of a function concerned. As such, "epoxy equivalent weight (EEW)" means the weight of resin, in grams, that contains one equivalent of epoxy.

As second essential component, the composition comprises a liquid phenol resin. In one embodiment, the composition comprises a liquid phenol resin being selected from the group consisting of a phenol novolac resin. The liquid phenol novolac resin preferably is based on a diallyl bisphenol F structure. It is more preferred that the at least one liquid phenol resin comprises a phenol novolac resin comprising chemically bonded benzene rings, which phenol novolac resin being represented by the formula (I): 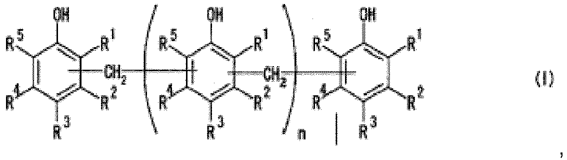 wherein R¹ to R⁵ each independently represents hydrogen, an alkyl group having 1 to 3 carbon atoms or an allyl group, and n represents an integer of 0 to 3, wherein each of R¹ to R⁵ may represent different meanings on distinguishing benzene rings. In one alternative, R¹ to R⁵ each independently represents hydrogen, an alkyl group having 1 to 3 carbon atoms or an allyl group, and n represents an integer of 0 to 3. In this alternative, R¹ to R⁵ have the same meaning in each distinguishing benzene ring.

In one embodiment, the liquid phenol resin comprises a phenol novolac resin according to formula (I), wherein R¹ to R⁵ each independently represents hydrogen or an allyl group, and n represents an integer of 0 to 3. In this alternative, it is more preferred that R¹ to R⁵ have the same meaning in each distinguishing benzene ring.

A commercially available liquid phenol resin is the product MEH-8000H produced by Meiwa Plastic Industries which product is a low viscosity resin with a 25°C viscosity of about 1,500 to 3,500 MPa s and with an OH equivalent value of about 139 to 143.

In one embodiment, the composition is characterized in that the liquid phenol compound has a OH/epoxy equivalent of from 0.3 to 1, preferably from 0.5 to 0.99, more preferred from 0.55 to 0.95.

The third essential component is the at least one phosphonium-based ionic liquid. In one embodiment, the composition comprises at least one phosphonium-based ionic liquid comprising at least one salt having the formula P⁺R⁶R⁷R⁸R⁹ X-, wherein R⁶, R⁷, R⁸ and R⁹ are independently selected from hydrogen, C₁-C₁₀ alkyl, C₃-C₁₀ cycloalkyl, C₆-C₁₈ aryl, C₇-C₂₄ aralkyl, C₂-C₁₀ alkenyl, -C(O)R^{q}, -C(O)OH, -CN and - NO₂; wherein R^{q} is C₁-C₆ alkyl, and wherein X⁻ is an anion.

In a preferred embodiment, the at least one phosphonium-based ionic liquid represents a salt having the formula P⁺R⁶R⁷R⁸R⁹ X-, wherein R⁶, R⁷, R⁸ and R⁹ are independently selected from hydrogen, C₁-C₆ alkyl, C₁-C₆ haloalkyl, C₁-C₆ hydroxyalkyl and C₃-C₆ cycloalkyl. It is more preferred that R⁶, R⁷, R⁸ and R⁹ are independently selected from hydrogen, C₂-C₄ alkyl, C₂-C₄ haloalkyl and C₂-C₄ hydroxyalkyl. In each of these two embodiments, X⁻ is an anion.

Further, in a preferred embodiment, the at least one phosphonium-based ionic liquid represents a salt having the formula P⁺R⁶R⁷R⁸R⁹ X⁻, wherein R⁶, R⁷, R⁸ and R⁹ are independently selected from hydrogen, C₁-C₁₆ alkyl, C₁-C₆ haloalkyl, C₁-C₆ hydroxyalkyl and C₃-C₆ cycloalkyl. It is further preferred, that one of R⁶, R⁷, R⁸ and R⁹ is C₈-C₁₆ alkyl, while the others are selected from hydrogen, C₁-C₆ alkyl, C₁-C₆ haloalkyl, C₁-C₆ hydroxyalkyl and C₃-C₆ cycloalkyl. It is more preferred that R⁶, R⁷, R⁸ and R⁹ are independently selected from hydrogen, C₂-C₄ alkyl, C₂-C₄ haloalkyl and C₂-C₄ hydroxyalkyl. In each of these two embodiments, X⁻ is an anion.

According to preferred embodiments, the composition comprises the at least one phosphonium-based ionic liquid representing a salt having the formula P⁺R⁶R⁷R⁸R⁹ X-, wherein X⁻ is selected from
- halides;
- pseudohalides and halogen-containing compounds of the formulae PF₆⁻, CF₃SO₃⁻, (CF₃SO₃)₂N⁻, CF₃CO₂⁻ and CCl₃CO₂⁻,
- CN-, SCN- and OCN-;
- phenates;
- sulfates, sulfites and sulfonates of the general formulae SO₄²⁻, HSO₄⁻, SO₃²⁻, HSO₃⁻, R^{a}OSO₃⁻ and R^{a}SO₃⁻;
- phosphates of the general formulae PO₄³⁻, HPO₄²⁻, H₂PO₄⁻, R^{a}PO₄²⁻, HR^{a}PO₄⁻ and R^{a}R^{b}PO₄⁻;
- phosphonates and phosphinates of the general formulae R^{a}HPO₃⁻, R^{a}R^{b}PO₂⁻ and R^{a}R^{b}PO₃⁻;
- phosphites of the general formulae: PO₃³⁻, HPO₃²⁻, H₂PO₃⁻, R^{a}PO₃²⁻, R^{a}HPO₃⁻ and R^{a}R^{b}PO₃⁻;
- phosphonites and phosphinites of the general formulae R^{a}R^{b}PO₂⁻, R^{a}HPO₂⁻, R^{a}R^{b}PO⁻ and R^{a}HPO⁻;
- carboxylic acid anions of the general formula R^{a}COO⁻;
- hydroxycarboxylic acids anions and sugar acid anions;
- saccharinates;
- borates of the general formulae BO₃³⁻, HBO₃²⁻, H₂BO₃⁻, R^{a}R^{b}BO₃⁻, R^{a}HBO₃⁻, R^{a}BO₃²⁻, B(OR^{a})(OR^{b})(OR^{c})(OR^{d})⁻, B(HSO₄)⁻ and B(R^{a}SO₄)⁻;
- boronates of the general formulae R^{a}BO₂²⁻ and R^{a}R^{b}BO⁻;
- carbonates and carbonic acid esters of the general formulae HCO₃⁻, CCO₃²⁻ and R^{a}CO₃⁻;
- silicates and silicic acid esters of the general formulae SiO₄⁴⁻, HSiO₄³⁻, H₂SiO₄²⁻, H₃SiO₄⁻, R^{a}SiO₄³⁻, R^{a}R^{b}SiO₄²⁻, R^{a}R^{b}R^{c}SiO₄⁻, HR^{a}SiO₄²⁻, H₂R^{a}SiO₄⁻ and HR^{a}R^{b}SiO₄⁻;
- alkyl- and arylsilanolates of the general formulae R^{a}SiO₃³⁻, R^{a}R^{b}SiO₂²⁻, R^{a}R^{b}R^{c}SiO⁻, R^{a}R^{b}R^{c}SiO₃⁻, R^{a}R^{b}R^{c}SiO₂⁻ and R^{a}R^{b}SiO₃²⁻;
- pyridinates and pyrimidinates;
- carboxylic acid imides, bis(sulfonyl)imides and sulfonylimides of the general formulae: 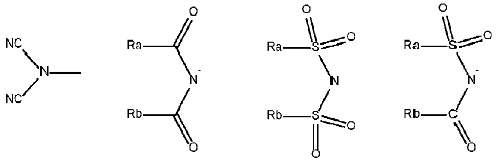
- methides of the general formula: 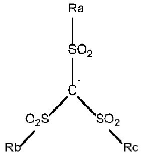
- alkoxides and aryloxides of the general formula R^{a}O⁻; and,
- sulfides, hydrogen sulfides, polysulfides, hydrogen polysulfides and thiolates of the general formulae S², HS⁻, [Sᵥ]²⁻, [HSᵥ]⁻ and [R^{a}S]⁻,

in which general formulae v is a whole positive number of from 2 to 10, R^{a}, R^{b}, R^{c} and R^{d} are independently selected from hydrogen, C₁-C₁₂ alkyl, C₁-C₁₂ heteroalkyl, C₅-C₁₂ cycloalkyl, C₅-C₁₂ heterocycloalkyl, C₆-C₁₈ aryl and C₅-C₁₈ heteroaryl,
wherein preferably X⁻ is selected from halides, pseudohalides, phosphonates and phosphinates of the general formulae R^{a}HPO₃⁻, R^{a}R^{b}PO₂⁻ and R^{a}R^{b}PO₃, wherein R^{a} and R^{b} are independently selected from C₁-C₄ alkyl or C₁-C₄ heteroalkyl.

Based on the definitions in the above list, preferred anions are selected from the group consisting of: halides; pseudohalides and halogen-containing compounds as defined above; carboxylic acid anions, in particular formate, acetate, propionate, butyrate and lactate; hydroxycarboxylic acid anions; pyridinates and pyrimidinates; carboxylic acid imides, bis(sulfonyl)imides and sulfonylimides; sulfates, in particular methyl sulfate and ethyl sulfate; sulfites; sulfonates, in particular methansulfonate; and, phosphates, in particular dimethyl-phosphate, diethyl-phosphate and di-(2-ethylhexyl)-phosphate.

In one embodiment, X⁻ is preferably selected from halides, pseudohalides, phosphonates and phosphinates of the general formulae R^{a}HPO₃⁻, R^{a}R^{b}PO₂⁻ and R^{a}R^{b}PO₃, wherein R^{a} and R^{b} are independently selected from C₁-C₄ alkyl or C₁-C₄ heteroalkyl.

In one embodiment, the phosphonium-based ionic liquid is selected from the group consisting of trihexyl (tetradecyl) phosphonium bis-2,4,4- (trimethylpentyl) phosphinate, trihexyl (tetradecyl) phosphonium dicyanamide, trihexyl (tetradecyl) phosphonium bis (2-ethylhexyl) phosphate, diethylphosphate tributyl (ethyl phosphonium), and trihexyl (tetradecyl) phosphonium bis-2,4,4- (trimethylpentyl) phosphinate.

In a most preferred embodiment, the phosphonium-based ionic liquid is tributylethylphosphonium diethylphosphate. A commercially available product, which could be used in composition according to the invention, is CYPHOS IL 169 supplied by Solvay.

In one embodiment, the liquid phenol compound and the liquid epoxy resin are present in the composition in an OH/epoxy equivalent ratio of from 0.3 to 1, preferably from 0.5 to 0.99, more preferred from 0.55 to 0.95, most preferred 0.65 to 0.85.

The invention's underlaying problem is solved by the subject-matter of claim 9. According to a second aspect of the invention, there is provided a cured product obtained from the liquid one-component (1K) epoxy resin composition according to the invention.

In one embodiment, the cured product is obtained by heating the liquid one-component (1K) epoxy resin composition.

In a further embodiment, the cured product is obtained by heating the liquid one-component (1K) epoxy resin composition to a temperature of from 110°C or more, preferably from 120°C or more. It is preferred that the heating is performed such that the temperature does not exceed 200°C.

In a further embodiment, the cured product is obtained by heating, wherein the curing time amounts to at least 10 min, preferably at least 20 min, more preferred at least 30 min.

The invention's underlaying problem is solved by the subject-matter of claim 12. According to a third aspect of the invention, there is provided the use of the cured product according to the invention as an adhesive, a coating, a sealant or in a composite material.

Therefore, the liquid one-component epoxy resin composition of the present invention can be used for wide applications such as sealing agents of a semiconductor and glass bonding applications such as sealing agents for displays of electroluminescence devices.

Features of referred embodiments being disclosed in combination with a specific aspect should be deemed to be disclosed as features of preferred embodiments for all other aspects. As such, e.g. the features designated as preferred embodiments disclosed in combination with the liquid one-component (1K) epoxy resin composition as the first aspect are deemed to be disclosed as features of preferred embodiments of the cured product as the second aspect or preferred embodiments of the use of the cured product as the third aspect.

The compositions of the present invention may further comprise adjuvants and additives that can impart improved properties to these compositions. For instance, the adjuvants and additives may impart one or more of: improved elastic properties; improved elastic recovery; longer enabled processing time; faster curing time; and lower residual tack. Included among such adjuvants and additives are catalysts, plasticizers, coupling agents, adhesion promoters, stabilizers including UV stabilizers, antioxidants, secondary tougheners, fillers, reactive diluents, drying agents, fungicides, flame retardants, rheological adjuvants, color pigments or color pastes, and/or optionally also, to a small extent, non-reactive diluents.

Suitable catalysts are substances that promote the (homo-) polymerization of epoxide compounds. Without intention to the limit the catalysts used in the present invention, mention may be made of the following suitable catalysts: acids or compounds hydrolyzable to acids, in particular a) organic carboxylic acids, such as acetic acid, benzoic acid, salicylic acid, 2-nitrobenzoic acid and lactic acid; b) organic sulfonic acids, such as methanesulfonic acid, p-toluenesulfonic acid and 4-dodecylbenzenesulfonic acid; c) sulfonic acid esters; d) inorganic acids, such as phosphoric acid; e) Lewis acid compounds, such as BF& amine complexes, SbF(; sulfonium compounds, bis-arene iron complexes; f) Bronsted acid compounds, such as pentafluoroantimonic acid complexes; and, e) mixtures of the aforementioned acids.

In an embodiment, an amine catalyst for the curing a composition based on the epoxy resin may be photobase generator: upon exposure to UV radiation - typically in the wavelength from 320 to 420 nm - said photobase generator releases an amine.

In an alternative embodiment, an acid catalyst may be selected from photoacid generators (PAGs): upon irradiation with light energy, ionic photoacid generators undergo a fragmentation reaction and release one or more molecules of Lewis or Bronsted acid that catalyze the ring opening and addition of the pendent epoxide groups to form a crosslink.

A "plasticizer" for the purposes of this invention is a substance that decreases the viscosity of the composition and thus facilitates its processability. Herein the plasticizer may preferably be selected from the group consisting of: polydimethylsiloxanes (PDMS); diurethanes, ethers of monofunctional, linear or branched C4-C16 alcohols, such as Cetiol OE; esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential.

In certain embodiments, the composition includes at least one epoxy silane coupling agent which can serve to enhance the adhesion of the curing composition to a given surface.

The compositions of the invention may further comprise fillers, non-reactive diluents or pigments.

In order to enhance shelf life even further, it is often advisable to further stabilize the compositions of the present invention with respect to moisture penetration through using drying agents. A need also occasionally exists to lower the viscosity of a coating, adhesive or sealant composition according to the present invention for specific applications, by using reactive diluent(s). The total amount of reactive diluents present will typically be up to 15 wt.%, and preferably from 1 to 5 wt.'/o, based on the total weight of the composition.

To form a composition, the above described parts are brought together and mixed. As is known in the art, to form one component (1K) curable compositions, the elements of the composition are brought together and homogeneously mixed under conditions which inhibit or prevent the reactive components from reacting: as would be readily comprehended by the skilled person in the art, this might include mixing conditions which limit or prevent exposure to moisture, heat or irradiation or which limit or prevent the activation of constituent latent catalyst(s). As such, it will often be preferred that the curative elements are not mixed by hand but are instead mixed by machine - a static or dynamic mixer, for example - in predetermined amounts under anhydrous conditions without intentional heating or photo-irradiation.

In the following, exemplary embodiments (A) to (H) are disclosed which represent particularly preferred embodiments.
(A)
   A liquid one-component (1K) epoxy resin composition comprising, based on the weight of the composition:
   a) from 20 to 80 wt.% of at least one liquid epoxy resin being a glycidyl ethers of polyhydric phenols, preferably a bisphenol A type epoxy resin;
   b) from 20 to 60 wt.% of at least one liquid phenol resin; and
   c) from 0.1 to 15 wt.% of at least one phosphonium-based ionic liquid.
(B)
   A liquid one-component (1K) epoxy resin composition comprising, based on the weight of the composition:
   a) from 20 to 80 wt.% of at least one liquid epoxy resin;
   b) from 20 to 60 wt.% of at least one liquid phenol resin being a phenol novolac resin; and
   c) from 0.1 to 15 wt.% of at least one phosphonium-based ionic liquid.
(C)
   A liquid one-component (1K) epoxy resin composition comprising, based on the weight of the composition:
   a) from 20 to 80 wt.% of at least one liquid epoxy resin;
   b) from 20 to 60 wt.% of at least one liquid phenol resin; and
   c) from 0.1 to 15 wt.% of at least one phosphonium-based ionic liquid being a salt having the formula P⁺R⁶R⁷R⁸R⁹ X⁻, wherein R⁶, R⁷, R⁸ and R⁹ are independently selected from hydrogen, C₁-C₁₆ alkyl, C₆-C₁₈ aryl, -C(O)R^{q}, -C(O)OH, -CN and - NO₂; wherein R^{q} is C₁-C₆ alkyl, and wherein X⁻ is an anion.
(D)
   A liquid one-component (1K) epoxy resin composition comprising, based on the weight of the composition:
   a) from 20 to 80 wt.% of at least one liquid epoxy resin being a glycidyl ethers of polyhydric phenols, preferably a bisphenol A type epoxy resin;
   b) from 20 to 60 wt.% of at least one liquid phenol resin being a phenol novolac resin; and
   c) from 0.1 to 15 wt.% of at least one phosphonium-based ionic liquid.
(E)
   A liquid one-component (1K) epoxy resin composition comprising, based on the weight of the composition:
   a) from 20 to 80 wt.% of at least one liquid epoxy resin being a glycidyl ethers of polyhydric phenols, preferably a bisphenol A type epoxy resin;
   b) from 20 to 60 wt.% of at least one liquid phenol resin being a phenol novolac resin; and
   c) from 0.1 to 15 wt.% of at least one phosphonium-based ionic liquid being a salt having the formula P⁺R⁶R⁷R⁸R⁹ X⁻, wherein R⁶, R⁷, R⁸ and R⁹ are independently selected from hydrogen, C₁-C₁₆ alkyl, C₆-C₁₈ aryl, -C(O)R^{q}, -C(O)OH, -CN and - NO₂; wherein R^{q} is C₁-C₆ alkyl, and wherein X⁻ is an anion.
(F)
   A liquid one-component (1K) epoxy resin composition comprising, based on the weight of the composition:
   a) from 20 to 80 wt.% of at least one liquid epoxy resin being a glycidyl ethers of polyhydric phenols, preferably a bisphenol A type epoxy resin;
   b) from 20 to 60 wt.% of at least one liquid phenol resin being a phenol novolac resin comprising chemically bonded benzene rings, which phenol novolac resin being represented by the formula (I): 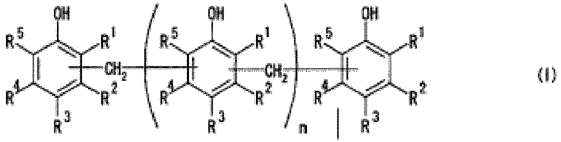 wherein R¹ to R⁵ each independently represents hydrogen, an alkyl group having 1 to 3 carbon atoms or an allyl group, and n represents an integer of 0 to 3; and
   c) from 0.1 to 15 wt.% of at least one phosphonium-based ionic liquid being a salt having the formula P⁺R⁶R⁷R⁸R⁹ X-, wherein R⁶, R⁷, R⁸ and R⁹ are independently selected from hydrogen, C₁-C₁₆ alkyl, C₆-C₁₈ aryl, -C(O)R^{q}, -C(O)OH, -CN and - NO₂; wherein R^{q} is C₁-C₆ alkyl, and wherein X⁻ is an anion.

The invention is further illustrated by the following examples without the intend to limit the invention's scope on the examples, only.

### EXAMPLES

The following compounds and materials are employed in the Examples:
- jER 828:: Bisphenol A, liquid epoxy resin formed by the condensation polymerization of bisphenol A and epichlorhydrin, available from Mitsubishi Chemical.
- MEH 8000H:: liquid phenol resin, available from UBE corporation.
- CYPHOS IL 169:: phosphonium-based ionic liquid tributylethylphosphonium diethylphosphate, available from Sovay

### Viscosity

The viscosity was measure by use of RheoStress 3000 viscometer (spindle 35/2°) manufactured by HAAKE AG.

### Pot Life

The time elapsed before the viscosity increased by a factor of 2 was employed as a pot life.

### Gel time

As used in general herein, "gel time" refers to the time required for the mixed components to reach the gel point at the testing temperature, unless stated otherwise. As used herein, the "gel point" is the point where the mixture's storage modulus exceeds its loss modulus.

**Table 1: Compositions of the Examples and Comparative Examples**

| | Example 1 | Example 2 | Comparative Example 1 | Comparative Example 2 |
|---|---|---|---|---|
| jER 828 | 55.0 wt.% | 59 wt.% | 57.9 wt.% | 91.7 wt.% |
| MEH 8000H | 40 wt.% | 40 wt.% | 42.1 wt.% | |
| CYPHOS IL 169 | 5.0 wt.% | 1.0 wt.% | | 8.3 wt.% |
| | | | | |

The following results were obtained:

### Example 1:

The invented sample is an amber clear liquid.
Viscosity: 19,670 mPas/25°C
Pot life stored at 25°C: 3 days
There is almost no viscosity increase observed for 1 day storage at 25°C
Shelf life stored at -40°C: over 1 year
Gel time @120°C: 14 minutes
It can cure well at 120°C for 1 hour

### Example 2

The invented sample is an amber clear liquid.
Viscosity: 15,520 mPas/25°C
Pot life stored at 25°C: 7 days
There is almost no viscosity increase for 3 day storage at 25°C
Gel time @120°C: 40 minutes
It can cure well at 120°C for 3 hours.

### Comparative Example 1

The comparative sample is a colorless clear liquid.
Gel time @120°C: > 4 hours (no cure observed till 4 hours)

### Comparative Example 2

The comparative sample is an amber clear liquid.
Gel time @120°C: > 4 hours (no cure observed till 4 hours).

## Claims

1. A liquid one-component (1K) epoxy resin composition comprising, based on the weight of the composition:
a) from 20 to 80 wt.% of at least one liquid epoxy resin;
b) from 20 to 60 wt.% of at least one liquid phenol resin; and
c) from 0.1 to 15 wt.% of at least one phosphonium-based ionic liquid.

2. The composition according to claim 1, which based on the weight of the composition, comprising:
a) from 30 to 70 wt.%, preferably 40 to 60 wt.%, of at least one liquid epoxy resin;
b) from 25 to 50 wt.%, preferably 30 to 45 wt.%, of at least one liquid phenol resin; and
c) from 0.2 to 10 wt.%, preferably 0.5 to 5 wt.%, of at least one phosphonium-based ionic liquid.

3. The composition according to claim 1 or claim 2, wherein said at least one liquid epoxy resin is selected from: glycidyl ethers of polyhydric alcohols and polyhydric phenols; glycidyl esters of polycarboxylic acids; and epoxidized polyethylenically unsaturated hydrocarbons, esters, ethers and amides.

4. The composition according to any one of claims 1 to 3, wherein the at least one liquid phenol resin comprises a phenol novolac resin, wherein preferably the at least one liquid phenol resin comprises a phenol novolac resin comprising chemically bonded benzene rings, which phenol novolac resin being represented by the formula (I): 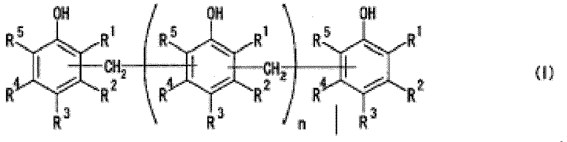 wherein R¹ to R⁵ each independently represents hydrogen, an alkyl group having 1 to 3 carbon atoms or an allyl group, and n represents an integer of 0 to 3, wherein each of R¹ to R⁵ may represent different meanings on distinguishing benzene rings.

5. The composition according to any one of claims 1 to 4, wherein the at least one phosphonium-based ionic liquid comprises at least one salt having the formula P⁺R⁶R⁷R⁸R⁹ X-, wherein R⁶, R⁷, R⁸ and R⁹ are independently selected from hydrogen, C₁-C₁₀ alkyl, C₃-C₁₀ cycloalkyl, C₆-C₁₈ aryl, C₇-C₂₄ aralkyl, C₂-C₁₀ alkenyl, - C(O)R^{q}, -C(O)OH, -CN and - NO₂; wherein R^{q} is C₁-C₆ alkyl, and wherein X- is an anion.

6. The composition according to claim 5, wherein R⁶, R⁷, R⁸ and R⁹ are independently selected from hydrogen, C₁-C₆ alkyl, C₁-C₆ haloalkyl, C₁-C₆ hydroxyalkyl and C₃-C₆ cycloalkyl, preferably R⁶, R⁷, R⁸ and R⁹ are independently selected from hydrogen, C₂-C₄ alkyl, C₂-C₄ haloalkyl and C₂-C₄ hydroxyalkyl.

7. The composition according to claim 5 or claim 6, wherein X⁻ is selected from
- halides;
- pseudohalides and halogen-containing compounds of the formulae PF₆⁻, CF₃SO₃⁻, (CF₃SO₃)₂N⁻, CF₃CO₂⁻ and CCl₃CO₂⁻,
- CN-, SCN- and OCN-;
- phenates;
- sulfates, sulfites and sulfonates of the general formulae SO₄², HSO₄⁻, SO₃²⁻, HSO₃⁻, R^{a}OSO₃⁻ and R^{a}SO₃⁻;
- phosphates of the general formulae PO₄³⁻, HPO₄²⁻, H₂PO₄⁻, R^{a}PO₄²⁻, HR^{a}PO₄⁻ and R^{a}R^{b}PO₄⁻;
- phosphonates and phosphinates of the general formulae R^{a}HPO₃⁻, R^{a}R^{b}PO₂⁻ and R^{a}R^{b}PO₃⁻;
- phosphites of the general formulae: PO₃³⁻, HPO₃², H₂PO₃⁻, R^{a}PO₃²⁻, R^{a}HPO₃⁻ and R^{a}R^{b}PO₃⁻;
- phosphonites and phosphinites of the general formulae R^{a}R^{b}PO₂⁻, R^{a}HPO₂⁻, R^{a}R^{b}PO⁻ and R^{a}HPO⁻;
- carboxylic acid anions of the general formula R^{a}COO⁻;
- hydroxycarboxylic acids anions and sugar acid anions;
- saccharinates;
- borates of the general formulae BO₃³⁻, HBO₃², H₂BO₃⁻, R^{a}R^{b}BO₃⁻, R^{a}HBO₃⁻, R^{a}BO₃²⁻, B(OR^{a})(OR^{b})(OR^{c})(OR^{d})⁻, B(HSO₄)⁻ and B(R^{a}SO₄)⁻;
- boronates of the general formulae R^{a}BO₂²⁻ and R^{a}R^{b}BO⁻;
- carbonates and carbonic acid esters of the general formulae HCO₃⁻, CO₃²⁻ and R^{a}CO₃⁻;
- silicates and silicic acid esters of the general formulae SiO₄⁴⁻, HSiO₄³⁻, H₂SiO₄²⁻, H₃SiO₄⁻, R^{a}SiO₄³⁻, R^{a}R^{b}SiO₄²⁻, R^{a}R^{b}R^{c}SiO₄⁻, HR^{a}SiO₄²⁻, H₂R^{a}SiO₄⁻ and HR^{a}R^{b}SiO₄⁻;
- alkyl- and arylsilanolates of the general formulae R^{a}SiO₃³⁻, R^{a}R^{b}SiO₂²⁻, R^{a}R^{b}R^{c}SiO⁻, R^{a}R^{b}R^{c}SiO₃⁻, R^{a}R^{b}R^{c}SiO₂⁻ and R^{a}R^{b}SiO₃²⁻;
- pyridinates and pyrimidinates;
- carboxylic acid imides, bis(sulfonyl)imides and sulfonylimides of the general formulae: 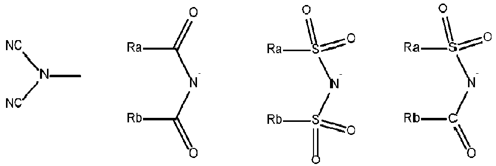
- methides of the general formula: 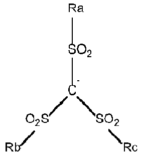
- alkoxides and aryloxides of the general formula R^{a}O⁻; and,
- sulfides, hydrogen sulfides, polysulfides, hydrogen polysulfides and thiolates of the general formulae S², HS⁻, [Sᵥ]²⁻, [HSᵥ]⁻ and [R^{a}S]⁻,
in which general formulae v is a whole positive number of from 2 to 10, R^{a}, R^{b}, R^{c} and R^{d} are independently selected from hydrogen, C₁-C₁₂ alkyl, C₁-C₁₂ heteroalkyl, C₅-C₁₂ cycloalkyl, C₅-C₁₂ heterocycloalkyl, C₆-C₁₈ aryl and C₅-C₁₈ heteroaryl,
wherein preferably X⁻ is selected from halides, pseudohalides, phosphonates and phosphinates of the general formulae R^{a}HPO₃⁻, R^{a}R^{b}PO₂⁻ and R^{a}R^{b}PO₃, wherein R^{a} and R^{b} are independently selected from C₁-C₄ alkyl or C₁-C₄ heteroalkyl.

8. The composition according to any one of claims 1 to 7, wherein the liquid phenol compound has a OH/epoxy equivalent of from 0.3 to 1, preferably from 0.5 to 0.99, more preferred from 0.55 to 0.95.

9. A cured product obtained from the liquid one-component (1K) epoxy resin composition according to any one or more of claims 1 to 8.

10. The cured product according to claim 9, which is obtained by heating the liquid one-component (1K) epoxy resin composition.

11. The cured product according to claim 9 or claim 10, which is obtained by heating the liquid one-component (1K) epoxy resin composition to a temperature of from 110°C or more, preferably from 120°C or more, wherein the curing time amounts to at least 10 min, preferably at least 20 min, more preferred at least 30 min.

12. Use of a cured product according to any one or more of claims 11 to 13 as an adhesive, a coating, a sealant or in a composite material.
